Europäisches Patentamt

European Patent Office

Office européen des brevets

(19)

(11) Veröffentlichungsnummer: **0 165 950**

**B1**

(12) # EUROPÄISCHE PATENTSCHRIFT

(45) Veröffentlichungstag der Patentschrift: 05.12.90

(51) Int. Cl.⁵: **G 02 C 7/06**, G 02 C 7/02

(21) Anmeldenummer: 85900055.6

(22) Anmeldetag: 05.12.84

(86) Internationale Anmeldenummer:
PCT/DE84/00263

(87) Internationale Veröffentlichungsnummer:
WO 85/02689 20.06.85 Gazette 85/14

(88) Verbunden mit 84114771.3/0149100 (europäische
Anmeldenummer/Veröffentlichungsnummer)
durch Entscheidung vom 06.07.88.

(54) **MEHRSTÄRKEN-BRILLENGLASS MIT HOHEM POSITIVEN BRECHWERT.**

(30) Priorität: 05.12.83 DE 3343891

(43) Veröffentlichungstag der Anmeldung:
02.01.86 Patentblatt 86/01

(45) Bekanntmachung des Hinweises auf die
Patenterteilung:
05.12.90 Patentblatt 90/49

(84) Benannte Vertragsstaaten:
AT BE CH DE FR GB IT LI LU NL SE

(56) Entgegenhaltungen:
DE-A-3 225 270
US-A-2 410 145
US-A-2 518 099

(73) Patentinhaber: Optische Werke G. Rodenstock
Isartalstrasse 43
D-8000 München 5 (DE)

(72) Erfinder: GUILINO, Günther
Kriegelsteiner Str. 3
D-8000 München 71 (DE)

(74) Vertreter: Steinmann, Otto C. et al
Kanzlei Münich, Steinmann, Schiller
Willibaldstrasse 36
D-8000 München 21 (DE)

Courier Press, Leamington Spa, England.

EP 0 165 950 B1

**Beschreibung**

Die Erfindung bezieht sich auf ein Mehrstärken-Brillenglas mit hohem positiven Brechwert, wie es von sehr stark fehlsichtigen Personen, beispielsweise Staroperierten benötigt wird.

Ein bekanntes Brillenglas der im Oberbegriff des Patentanspruchs 1 vorausgesetzten Art ist beispielsweise aus der Formendruckschrift AO TECHNISCHE BESCHREIBUNG "Das FUL-VUE Aspheric Cataract Glas" bekannt. Das in dieser Druckschrift beschriebene Bifokalglas weist einen sphärischen Nahteil auf, der als Kugelkalotte auf den asphärischen Wirkungsteil "aufgesetzt" ist, der als Fernteil dient.

Da Brillengläser mit hohem positiven Brechwert meistens aus einem Kunststoffmaterial mittels eines Gießverfahrens hergestellt werden, ist das bekannte Brillenglas mit "aufgesetztem" Nahteil zwar einfach herzustellen: in die Gießform des Einstärkenglases wird nämlich einfach eine kugelförmige ausnehmung für den Nahteil eingearbeitet. Der aufgesetzte Nahteil führt aber zu einem unschönen Aussehen und ist darüberhinaus nur mit verhältnismäßig kleinen Abmessungen herstellbar, so daß das Sehen in der Nähe eingeengt ist. Zudem haben die bekannten sphärischen Nahteile insbesondere bei den hohen erforderlichen Brechwerten schlechte Abbildungseigenschaften.

Ein Bifokalglas mit hohem Brechwert anderer Gattung ist aus der US—A—2 518 099 bekannt. Bei diesem Brillenglas, das als sog. Lentikularglas ausgebildet ist, ist als Nahteil ein "Einsatz" aus einem Material mit einer anderen Brechzahl, aber gleicher Krümmung vorzusehen. Ein derartiges Glas ist mittels eines Gießverfahrens, wie es heute überwiegende angewandt wird, da Brillengläser hoher Wirkung bevorzugt aus einem Kunststoffmaterial bestehen sollen, praktisch nicht herzustellen.

Der Erfindung liegt die Aufgabe zugrunde, ein Brillenglas mit hohem positiven Brechwert gemäß dem Oberbegriff des Patentanspruchs 1 derart weiterzubilden, daß das leicht herstellbare Brillenglas einen großen Nahteil mit guten optischen Eigenschaften aufweist, der zudem die kosmetische Wirkung nicht beeinträchtigt.

Diese Aufgabe wird erfindungsgemäß durch die im kennzeichnenden Teil des Patentanspruchs 1 angegebenen Merkmale gelöst. Die asphärische Ausbildung auch des Nahteils ermöglicht es, einen befriedigenden Korrektionszustand auch im Nahteil zu erzielen. Ferner nimmt der Nahteil vollständig den unterhalb einer bestimmten Linie liegenden Teil des Wirkungsteils ein. Dies ermöglicht in Verbindung mit der guten Korrektion des Nahteils, die durch die asphärische Ausbildung erst möglich wird, ein ungestörtes Sehen im Nahbereich. Der stetige und praktisch ohne Knick erfolgende Übergang des Hauptmeridians des Nahteils in den Hauptmeridian des darüberliegenden Bereichs des Wirkungsteils verbessert die kosmetische Wirkung des erfindungsgemäßen Mehrstärken-Billenglases.

Besonders vorteilhaft ist es jedoch, daß durch eine entsprechende Gestaltung der Übergangzone der Sprung in der Randzone verschwindet. Hierdurch wird unter anderem das Einsetzen des erfindungsgemäßen Brillenglases in eine Brillenfassung wesentlich erleichtert. Darüberhinaus trägt diese Gestaltung der Übergangzone in Verbindung mit der im Bereich des Hauptmeridians ebenfalls verschwindenden Trennkante auch zur Verbesserung der kosmetischen Wirkung bei.

Weiterbildungen der Erfindung sind in den Unteransprüchen angegeben.

Gemäß Anspruch 2 ist zwischen dem Nahteil und dem Fernteil ein asphärischer Zwischenteil vorgesehen, der in gleicher Weise wie vom Nahteil von dem oberhalb des Zwischenteils liegenden Fernteil durch eine annähernd horizontal verlaufende Trennkante getrennt ist, und dessen vertikaler Hauptmeridian stetig und praktisch ohne Knick in den Hauptmeridian des Fernteils übergeht. In der Praxis bedeutet dies, daß sowohl der Übergang von Nahteil zu dem darüberliegenden Bereich als auch der Übergang vom Zwischenteil zum Fernteil in einem bestimmten Bereich um den Hauptmeridian herum praktisch ohne Sprung erfolgt.

Ferner erlaubt die asphärische Ausbildung des Zwischenteils ein ungestörtes Sehen in dem großen Zwischenteil, der bis in die Randbereiche des Wirkungsteils reicht.

Durch das praktisch knickfreie Anschließen der Hauptmeridiane der einzelnen Teile an den Übergangspunkten gemäß Anspruch 3 wird die kosmetische Wirkung des erfindungsgemäßen Mehrstärken-Brillenglases weiter verbessert.

Gemäß Anspruch 4 sind die Trennkanten zwischen den einzelnen Teilen entsprechend dem Verlauf des Hauptstrahls durch die Trennlinie und den optischen Augendrehpunkt verkippt. Hierdurch wird die störende Wirkung der Trennkanten praktisch auf einen infinitesimal kleinen Bereich beschränkt.

In den Ansprüchen 5 und 6 sind vorteilhafte Abmessungen des Fernteils sowie des Zwischenteils festgelegt. Hierdurch sind bei Zugrundelegung der für Brillengläser gemäß dem Oberbegriff des Patentanspruchs 1 üblichen Durchmesser des Wirkungsteils von etwa 40 mm die Abmessungen der einzelnen Teile festgelegt.

Die erfindungsgemäße Ausbildung des Brillenglases bedingt eine Trennkante bzw. einen Sprung zwischen dem Fernteil und dem Nahteil bzw. dem Fernteil und dem Zwischenteil sowie dem Zwischenteil und dem Nahteil.

In Anspruch 7 ist eine allgemeine Gleichung für den Verlauf der Übergangszonen angegeben, die sich an die jeweiligen Teile des Wirkungsteils zum Rand hin anschließt und die in die Randzone übergeht, die wiederum mit der augenseitigen Fläche einen Tragrand konstanter Dicke bildet.

Mit guten Ergebnissen kann das erfindungsgemäße Mehrstärken-Brillenglas dadurch aufgebaut werden, daß für den Fernteil, den Nahteil und gegebenenfalls den Zwischenteil Segmente aus Flächen

2

# EP 0 165 950 B1

genommen werden, wie sie beispielsweise in der DE—OS 32 25 270 numerisch angegeben sind, und deren Scheitelbrechwert in etwa dem gewünschten Brechwert des jeweiligen Teils entspricht.

Vorteilhafterweise kann aber auch gemäß Anspruch 8 der Nahteil und gegebenenfalls der Zwischenteil für Entfernungen optimiert sein, bei denen die jeweiligen Teile verwendet werden.

Selbstverständlich kann zur Berechnung der Flächensegmente der jeweiligen Teile des Wirkungsteils von beliebigen allgemeinen Formeln ausgegangen werden, wie sie beispielsweise in der DE—OS 29 41 733, der US—PS 3 781 097 oder der US—PS 3 169 247 beschrieben sind. Besonders vorteilhaft ist es jedoch, ein Flächensegment aus einer rotationssymmetrischen Fläche zu verwenden, die der Allgemeinen Formel

$$z \; = \; C*h^2 \; / \; (1 \; + \; \sqrt{(1-(K+1)C^2*h^2))} \; + \; \sum_{i=3}^{6} \; I_i*h^i$$

wobei

z der Abstand eines Punktes auf dem Wirkungsteil vom Scheitelpunkt der Vorderfläche in Richtung der der optischen Achse ist, und

h der Abstand dieses Punktes von der optischen Achse ist,

genügt, und die jeweilige Fläche gemäß den in der DE—OS 32 25 270 angegebenen Optimierungsregeln zu optimieren.

Ferner ist es gemäß Anspruch 10 möglich, ein Flächensegment aus einer Fläche mit torischem Anteil, d.h. aus einer nicht rotationssymmetrischen Fläche zu verwenden, um den Astigmatismus schiefer Bündel, der beim Sehen durch den Nahteil und gegebenenfalls den Zwischenteil auftritt, zu kompensieren.

Die Erfindung wird nachstehend unter Bezugnahme auf die Zeichnung näher beschrieben, in der

Fig. 1 eine Aufsicht auf ein erfindungsgemäßes Brillenglas, und

Fig. 2 einen Schnitt durch ein erfindungsgemäßes Brillenglas bei der Linie I—I in Fig. 1 zeigt.

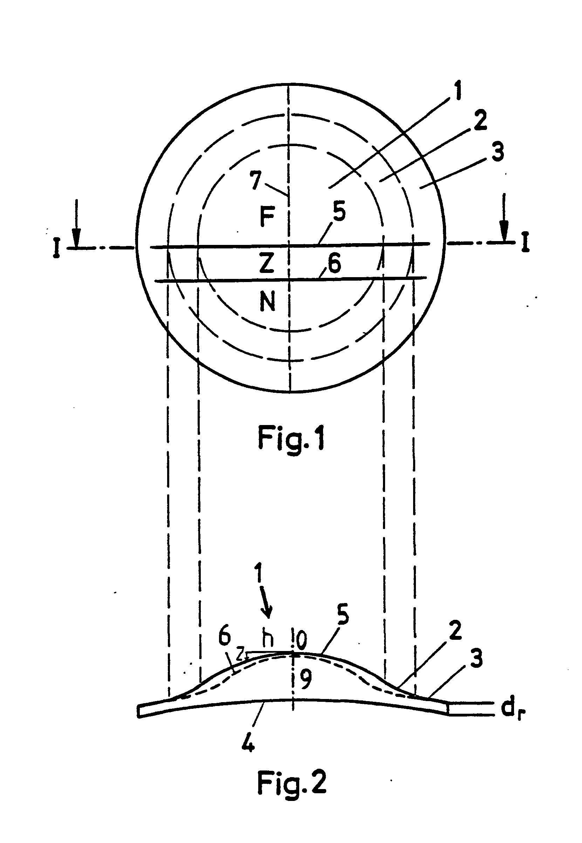

Das in den Fig. 1 und 2 dargestellte erfindungsgemäße Mehrstärken-Brillenglas weist einen Wirkungsteil 1, eine Übergangszone 2, die ringförmig den Wirkungsteil 1 umgibt und eine sich daran anschließende Randzone 3 auf, die mit der augenseitigen Fläche 4 einen Tragrand konstanter Dicke dr bildet.

Der Wirkungsteil 1 hat einen Fernteil F, einen Zwischenteil Z und einen Nahteil N. Die einzelnen Teile sind voneinander durch Trennkanten bzw. Sprünge 5 bzw. 6 getrennt. Die Trennkanten 5 bzw. 6 verschwinden mathematisch exakt am Hauptmeridian 7, der von dem einen Teil zu dem darunter- bzw. darüberliegenden Teil stetig und praktisch ohne Kinck übergeht. In der Praxis bedeutet dies, daß die Trennkanten bzw. "Sprünge" zwischen den einzelnen Teilen im engeren Bereich des Hauptmeridians nicht spürbar sind.

In den Fig. 1 und 2 verläuft der Hauptmeridian 7 vertikal und die obenen Trennkanten 5 und 6 horizontal. Natürlich kann das erfindungsgemäße Brillenglas in an sich bekannter Weise in der Gebrauchsstellung "nasal" verkippt sein.

Ferner können die Trennkanten so verlaufen, daß sie in der Gebrauchsstellung des verkippten Brillenglases horizontal verlaufen.

Für die einzelnen Bereiche können Segmente aus rotationssymmetrischen asphärischen Flächen verwendet werden. Besonders vorteilhaft ist es dabei, von der allgemeinen Formel

$$z \; = \; C*h^2 \; / \; (1 \; + \; \sqrt{(1-(K+1)C^2*h^2))} \; + \; \sum_{i=3}^{6} \; I_i*h^i$$

wobei

z der Abstand eines Punktes auf dem Wirkungsteil 1 vom Scheitelpunkt 0 der Vorderfläche 1 in Richtung der der optischen Achse 9 ist, und

h der Abstand dieses Punktes von der optischen Achse ist,

für die einzelnen Teile des Wirkungsteils 1 auszugehen und diese entsprechend den in der DE—OS 32 25 270 angegebenen Regeln zu optimieren. Auf diese Druckschrift, in der auch numerische Zahlenwerte für die einzelnen Koeffizienten angegeben sind, wird bezüglich aller hier nicht im einzelnen erläuterten Begriffe ausdrücklich Bezug genommen.

Dabei ist es möglich, für den Fernteil, den Nahteil sowie den Zwischenteil Segmente aus in der DE—OS 32 25 270 numerisch angegebenen rotationssymmetrischen Flächen zu verwenden, deren Scheitelbrechwert dem gewünschten Brechwert für den Fernteil, den Nahteil bzw. den Zwischenteil entspricht. Ferner ist es auch möglich, den Zwischenteil und den Nahteil mit den in der DE—OS 32 25 270 angegebenen Optimierungsregeln für die Entfernungen zu optimieren, für die durch die jeweiligen Teile "geblickt" wird.

Selbstverständlich können auch andere bekannte Optimierungsregeln bzw. allgemeine Formeln für den Flächenaufbau herangezogen werden.

3

Anstelle der vorstehend angesprochenen Segmente aus rotationssymmetrischen Flächen können für den Nahteil und gegebenenfalls auch für den Zwischenteil nicht rotationssymmetrische asphärische Flächensegmente, beispielsweise torische oder atorische Flächen verwendet werden, deren torischer Anteil so bemessen ist, daß er den Astigmatismus schiefer Bündel kompensiert, der beim Durchblick durch die entsprechenden Teile auftritt.

Aus Fig. 2 ist ersichtlich, daß die Übergangszone 2 im Bereich des Fernteils, des Zwischenteils und des Nahteils derart gestaltet ist, daß die Trennkanten 5 bzw. 6 in der Randzone 3 verschwinden. Der Verlauf der Übergangszone kann dabei der allgemeinen Gleichung

$$z_{N,F,Z} = \sum_{i=0}^{4} a_{i,N,F,Z} * h^i$$

genügen, wobei

z der Abstand eines Punktes vom Scheitelpunkt der Vorderfläche 1 in Richtung der optischen Achse 9, und

h der Abstand dieses Punktes von der optischen Achse ist.

Die Koeffizienten $a_{i,N,F\ oder\ Z}$ sind dabei so bestimmt, daß die Übergangszone 2 bezüglich Funktionswert und erste Ableitung stetig an dem jeweiligen Teil F, Z bzw. N des Wirkungsteils 1 sowie an die Randzone 3 angesetzt ist, die mit der augenseitigen Fläche 4 einen Tragrand konstanter Dicke dr bildet.

**Patentansprüche**

1. Mehrstärken-Brillenglas mit hohem positiven Brechwert, mit einer konvexen Vorderfläche, die einen asphärischen Wirkungsteil mit Fernteil und sich hiervon in der Krümmung unterscheidendem zusätzlichen Nahteil, eine den Wirkungs teil umgebende Übergangszone sowie eine Randzone aufweist, und einer augenseitigen Fläche, die mit der Randzone einen Tragrand bildet, dadurch gekennzeichnet, daß auf der Vorderfläche der asphärisch ausgebildete Nahteil (N) von dem in der Gebrauchsstellung des Glases darüberliegenden Bereich des Wirkungsteils (F bzw. Z) durch eine Trennkante (6) getrennt ist, die annähernd horizontal verläuft, daß lediglich der Hauptmeridian (7) des Nahteils (N) stetig und praktisch ohne die Kosmetische Wirkung störenden Knick in den Hauptmeridian (7) des darüberliegenden Bereichs (Z bzw. F) des Wirkungsteils (1) übergeht, und daß die den Wirkungsteil (1) umgebende Übergangszone (2) so gestaltet ist, daß die Trennkante (5, 6) zwischen den einzelnen Teilen (N, Z, F) des Wirkungsteils (1) in der Übergangszone verschwindet und die Randzonen (3) aller Teile gleich sind.

2. Brillenglas nach Anspruch 1, dadurch gekennzeichnet, daß zwischen dem Nahteil (N) und dem Fernteil (F) ein asphärischer Zwischenteil (Z) vorgesehen ist, der vom Fernteil durch eine annähernd eben verlaufende Trennkante (5) getrennt ist, und dessen vertikaler Hauptmeridian (7) stetig und praktisch ohne Knick in den Hauptmeridian (7) des Fernteils übergeht.

3. Brillenglas nach Anspruch 1 oder 2, dadurch gekennzeichnet, daß die Tangenten in Richtung des Hauptmeridians (7) an den Übergangspunkten auf dem Hauptmeridian zwischen den einzelnen Teilen des Wirkungsteils einen Winkel kleiner als etwa 0,5° einschließen.

4. Brillenglas nach einem der Ansprüche 1 bis 3, dadurch gekennzeichnet, daß die Trennkanten (5, 6) entsprechend dem Hauptstrahl durch die Trennlinie und dem optischen Augendrehpunkt verkippt sind.

5. Brillenglas nach einem der Ansprüche 1 bis 4, dadurch gekennzeichnet, daß der optische Mittelpunkt des Fernteils etwa 1 mm oberhalb der Trennkante zu dem Darunterliegenden bereich liegt.

6. Brillenglas nach einem der Ansprüche 2 bis 5, dadurch gekennzeichnet, daß die Höhe des Zwischenteils ca. 10 mm beträgt.

7. Brillenglas nach einem der Ansprüche 1 bis 6, dadurch gekennzeichnet, daß die Übergangszone (2) der allgemeinen Gleichung

$$z_{N,F,Z} = \sum_{i=0}^{4} a_{i,N,F,Z} * h^i$$

genügt, wobei

z der Abstand eines Punktes vom Scheitelpunkt der Vorderfläche in Richtung der optischen Achse und h der Abstand dieses Punktes von der optischen Achse ist,

und daß die Koeffizienten $a_{i,N,F\ oder\ T}$ so bestimmt sind, daß die Übergangszone bezüglich Funktionswert und erste Ableitung stetig an den jeweiligen Teil (F, Z, N) des Wirkungsteils (1) und der Randzone (3) angesetzt ist, die mit der augenseitigen Fläche einen Tragrand konstanter Dicke bildet.

8. Brillenglas nach einem der Ansprüche 1 bis 7, dadurch gekennzeichnet, daß der Zwischenteil für eine Entfernung von ca. 0,5 bis 0,7 m und der Nahteil für eine Entfernung von ca. 0,3 bis 0,5 m optimiert ist.

9. Brillenglas nach einem der Ansprüche 1 bis 8, dadurch gekennzeichnet, daß jeder der Teile des Wirkungsteils ein Flächensegment aus einer rotationssystemmetrischen Fläche ist, die der allgemeinen Formel

$$z = C*h^2 / (1 + \sqrt{(1-(K+1)C^2*h^2)}) + \sum_{i=3}^{6} I_i*h^i$$

genügt, wobei

z der Abstand (Pfeilhöhe) eines Punktes auf der Fläche von Scheitelpunkt dieser Fläche ist,

h der Abstand dieses Punktes von der optischen Achse ist, und

C durch den gewünschten Brechwert des jeweiligen Teils des Wirkungsteils bestimmt ist, und daß die asphärischen Koeffizienten K, $I_3$, $I_4$, $T_5$ und $I_6$ derart bestimmt sind, daß der Visus im gesamten Bereich des Durchblickwinkels durch den jeweiligen Teil maximal ist.

10. Brillenglas nach einem der Ansprüche 1 bis 8, dadurch gekennzeichnet, daß der Nahteil und gegebenenfalls der Zwischenteil torisch oder atorisch derart ausgebildet ist, daß der Astigmatismus schiefer Bündel kompensiert wird.

**Revendications**

1. Verre de lunettes à foyer progressif doté d'une focale positive élevée avec une surface antérieure convexe qui présente une partie active non sphérique avec l'élément de vision lointaine et l'élément de vision proche supplémentaire qui diffèrent par la courbure, une zone de passage autour de la partie active ainsi qu'une zone marginale et une surface postérieure qui forme un bord porteur avec la zone marginale, caractérisé par la fait que sur la surface frontale l'élément de vision proche non sphérique (N) est séparé par un bord de séparation (6) de la zone de la partie active (F respectivement Z) sus-jacente dans la position d'utilisation du verre, ce bord ayant un trajet presque horizontal, par le fait que seulement le méridien principal (7) de l'élément de vision proche (N) passe continûment et pratiquement sans courbure qui pourrait nuire à l'esthétique dans le méridien principal (7) de la zone sus-jacente (Z respectivement F) de la partie active (1) et par le fait que la zone de transition (2) qui entour la partie active (1) est formée de sorte que le bord de séparation (5, 6) entre les parties singulières (N, Z, F) de la partie active (1) disparaisse dans la zone de transition et que les zones marginales (3) de toutes les parties soient égales.

2. Verre de lunettes selon la revendication 1, caractérisé par le fait qu'entre l'élément de vision proche (N) et l'élément de vision lointaine (F) est prévue une parie intermédiaire non sphérique (Z), séparée de l'élément de vision lointaine par un bord de séparation (5) presque plat et dont le méridien principal vertical (7) passe continûment et pratiquement sans courbure dans le méridien principal (7) de l'élément de vision lointaine.

3. Verre de lunettes selon la revendication 1 ou 2, caractérisé par le fait que les tangentes en direction du méridien principal (7) renferment au point de transition sur le méridien principal entre les parties singulières de la partie active un angle plus petit qu'environ 0,5°.

4. Verre de lunettes selon l'une quelconque des revendications 1 à 3, caractérisé par le fait que les bords de séparation (5, 6) sont inclinés proportionnellement au faisceau principal à travers la ligne de séparation et le centre de rotation optique de l'oeil.

5. Verre de lunettes selon l'une quelconque des revendications 1 à 4, caractérisé par le fait que le centre optique de l'élément de vision lointaine est situé à environ 1 mm au-dessus du bord de séparation vers la zone sousjacente.

6. Verre de lunettes selon l'une quelconque des revendications 2 à 5, caractérisé par le fait que la hauteur de la partie intermédiaire est d'environ 10 mm.

7. Verre de lunettes selon l'une quelconque des revendications 1 à 6, caractérisé par le fait que la zone de passage (2) est déterminée selon l'équation

$$z_{N,F,Z} = \sum_{i=0}^{4} a_{i,N,F,Z} * h^i$$

dans laquelle:

z représente la distance entre un point et le sommet de la surface antérieure en direction de l'axe optique, et

h représente la distance de ce point à l'axe optique, et que les coefficients $a_{i,N,F}$ ou Z sont déterminés de sorte que la zone de transition soit jointe quant à la valeur de la fonction et à la première dérivée continûment à la partie respective (F, Z et N) de la partie active (1) et à la zone marginale (3) qui forme un bord porteur d'épaisseur constante dr avec la surface postérieure du verre.

8. Verre de lunettes selon l'une quelconque des revendications 1 à 7, caractérisé par le fait que la partie intermédiaire est optimisée pour une distance d'environ 0,5 à 0,7 m et l'élément de vision proche pour une distance d'environ 0,3 à 0,5 m.

9. Verre de lunettes selon l'une quelconque des revendications 1 à 8, caractérisé par le fait que chaque parie de la partie active représente un segment de surface d'une surface à symétrie de révolution répondant à la formule générale:

$$z = C*h^2 / (1 + \sqrt{(1-(K+1)C^2*h^2)}) + \sum_{i=3}^{6} I_i*h^i$$

dans laquelle:

z représente la distance (hauteur de la flèche) entre un point sur la surface et le sommet de cette surface, et

h représente la distance de ce point à l'axe optique, et C est déterminé par la focale désirée de la partie respective de la partie active, et en ce que les coefficients non sphériques (K, $I_3$, $I_4$, $I_5$ et $I_6$) sont déterminés de sorte que le visus de la zone totale de l'angle de visée à travers la partie respective soit maximal.

10. Verre de lunettes selon l'une quelconque des revendications 1 à 8, caractérisé par le fait que l'élément de vision proche et éventuellement la partie intermédiaire sont d'une forme torique ou atorique pour permettre la compensation de l'astigmatisme de faisceaux inclinés.

## Claims

1. Multifocal spectacle lens with high positive focal power, with a convex front surface which possesses an aspheric focal section with distance portion and an additional near segment different from this in the curvature, a transition zone surrounding the focal section and a peripheral zone, and a back surface which forms a carrier margin with the peripheral zone, characterized by the fact that on the front surface the aspherically designed near segment (N) is separated from the portion of the focal section (F or Z) above it in the position of wear of the lens by a dividing edge (6) which has an approximate horizontal course, and by the fact that only the main meridian (7) of the near segment (N) goes continuously and practically without the bend which impairs the cosmetic effect into the main meridian (7) of the portion (Z or F) of the focal section (1) above it, and by the fact that the transition zone (2) surrounding the focal section (1) is designed in such a way that the dividing edge (5, 6) disappears between the individual portions (N, Z, F) of the focal section (1) in the transition zone, and the peripheral zones (3) of all portions are equal.

2. Spectacle lens according to claim 1, characterised by the fact that between the near segment (N) and the distance portion (F) an aspheric intermediate portion (Z) is provided which is separated from the distance portion by a dividing edge (5) with an approximately flat course, and whose vertical main meridian (7) goes into the main meridian (7) of the distance portion continuously and with practically no bend.

3. Spectacle lens according to claims 1 or 2, characterised by the fact that the tangents in the direction of the main meridian (7) include at the transition points on the main meridian between the individual portions of the focal section an angle smaller than about 0.5°.

4. Spectacle lens according to any of the claims 1 to 3, characterised by the fact that the dividing edges (5, 6) are tilted in accordance with the main ray through the dividing line and with the optical centre of rotation.

5. Spectacle lens according to any of the claims 1 to 4, characterised by the fact that the optical centre of the distance portion is about 1 mm above the dividing edge to the portion below.

6. Spectacle lens according to any of the claims 2 to 5, characterised by the fact that the height of the intermediate portion is approx. 10 mm.

7. Spectacle lens according to any of the claims 1 to 6, characterised by the fact that the transition zone (2) satisfies to the general equation

$$z_{N,F,Z} = \sum_{i=0}^{4} a_{i,N,F,Z} * h^i$$

where

z is the distance of a point from the vertex of the front surface in the direction of the optical axis, and

h is the distance of this point from the optical axis,

and by the fact that the coefficients $a_{i,N,F \text{ or } \tau}$ are determined in such a way that the transition zone (with reference to functional value and first derivative) is set continuously to the respective portion (F, Z, N) of the focal section (1) and to the peripheral zone (3) which forms a carrier margin of constant thickness with the back surface.

8. Spectacle lens according to any of the claims 1 to 7, characterised by the fact that the intermediate portion is optimised for a distance of approx. 0.5 to 0.7 m and the near segment for a distance of approx. 0.3 to 0.5 m.

9. Spectacle lens according to any of the claims 1 to 8, characterised by the fact that each of the portions of the focal section is an area segment from a rotationally symmetrical area which satisfies the general formula

$$z = C*h^2 / (1 + \sqrt{(1-(K+1)C^2*h^2)}) + \sum_{i=3}^{6} I_i*h^i$$

where
z is the distance (sag) of a point of the surface from the vertex of this surface,
h is the distance of this point from the optical axis, and
C is determined by the desired focal power of the respective portion of the focal section,
and by the fact that the aspheric coefficients $K$, $I_3$, $I_4$, $I_5$ and $I_6$ are determined in such a way that the visual acuity in the whole area of the angle of view through the respective portion is maximal.

10. Spectacle lens according to any of the claims 1 to 8, characterised by the fact that the near segment and, if required, the intermediate portion are designed torically or atorically in such a way that the oblique astigmatism is compensated for.

Fig.1

Fig.2